# EUROPÄISCHE PATENTSCHRIFT

(11) **EP 0 403 792 B1**
(45) Veröffentlichungstag und Bekanntmachung des Hinweises auf die Patenterteilung: **28.07.1993**
(21) Anmeldenummer: 90109183.5
(22) Anmeldetag: 16.05.1990
(51) Int. Cl.: B60T 13/66

(54) **Druckmittelbetätigbare Bremsanlage für Fahrzeuge**
Fluid pressure actuated brake installation for vehicles
Installation de freinage actionnée par fluide sous pression pour véhicules

(30) Priorität: 19.06.1989 DE 3919937
(43) Veröffentlichungstag der Anmeldung: 27.12.1990
(73) Patentinhaber: ROBERT BOSCH GMBH, 70442 Stuttgart (DE)
(72) Erfinder: Stumpe, Werner, Dipl.-Ing., D-7000 Stuttgart 50 (DE); Schlichenmaier, Andreas, Dipl.-Ing. (FH), D-7129 Zaberfeld 2 (DE); Blanc, Martin, Dipl.-Ing. (FH), D-7134 Knittlingen/Kleinvillars (DE)

(56) Entgegenhaltungen:
- DE-A- 3 545 021
- US-A- 4 040 676

## Beschreibung

### Stand der Technik

Die Erfindung geht aus von einer druckmittelbetätigbaren Bremsanlage für Fahrzeuge, insbesondere Nutzfahrzeuge, nach der Gattung des Hauptanspruchs. Es ist schon eine derartige Bremsanlage aus der DE-OS 35 45 021 (Figur 7) bekannt, bei der zwei elektrisch voneinander getrennte Bremswertgeber vorgesehen sind. Diese sind mit dem Bremspedal gekoppelt und bei Pedalbetätigung synchron verstellbar. Aus sicherheitstechnischen Gründen wird das Bremssignal der beiden Bremswertgeber über getrennte Signalleitungen je einer elektrisch entkoppelten und an eine eigene Spannungsversorgung angeschlossenen Steuereinrichtung zugeführt. Von den Steuereinrichtungen werden Schaltsignale erzeugt, mit denen entsprechend der vom Fahrzeugführer gewünschten Verzögerung die Drucksteuerventile angesteuert werden. Durch eine derartige redundante Anordnung der Bremswertgeber, der Signalleitungen und der Steuereinrichtungen wird zwar eine hohe Funktionssicherheit der Bremsanlage erzielt, jedoch führen Kurzschlüsse in den mechanisch besonders gefährdeten Signalleitungen zu fehlerhaften Bremssignalen.

### Vorteile der Erfindung

Die erfindungsgemäße Bremsanlage mit den kennzeichnenden Merkmalen des Hauptanspruchs hat demgegenüber den Vorteil, daß bei Kurzschluß der beiden Signalleitungen die vom Bremswertgeber abgegebenen Spannungssignale aufgrund der vorgeschalteten Widerstände eine resultierende Spannung ergeben, deren Höhe einen Verlauf über den Betätigungsweg des Bremswertgebers nimmt, die auf einfache Weise eine Unterscheidung zwischen gültigem oder ungültigem Bremssignal ermöglicht.

Durch die im Unteranspruch aufgeführte Maßnahme ist eine mechanisch einfach herstellbare Ausgestaltung der im Hauptanspruch angegebenen Bremsanlage möglich.

### Zeichnung

Ein Ausführungsbeispiel der Erfindung ist in der Zeichnung vereinfacht dargestellt und in der nachfolgenden Beschreibung näher erläutert. Es zeigen Figur 1 ein Blockschaltbild einer druckmittelbetätigbaren Fahrzeugbremsanlage mit zwei Bremswertgebern, Figur 2 ein Schaltbild der Bremswertgeber und Figur 3 ein Diagramm der Spannungsverläufe der von einem Bremswertgeber abgegebenen Signale.

### Beschreibung des Ausführungsbeispiels

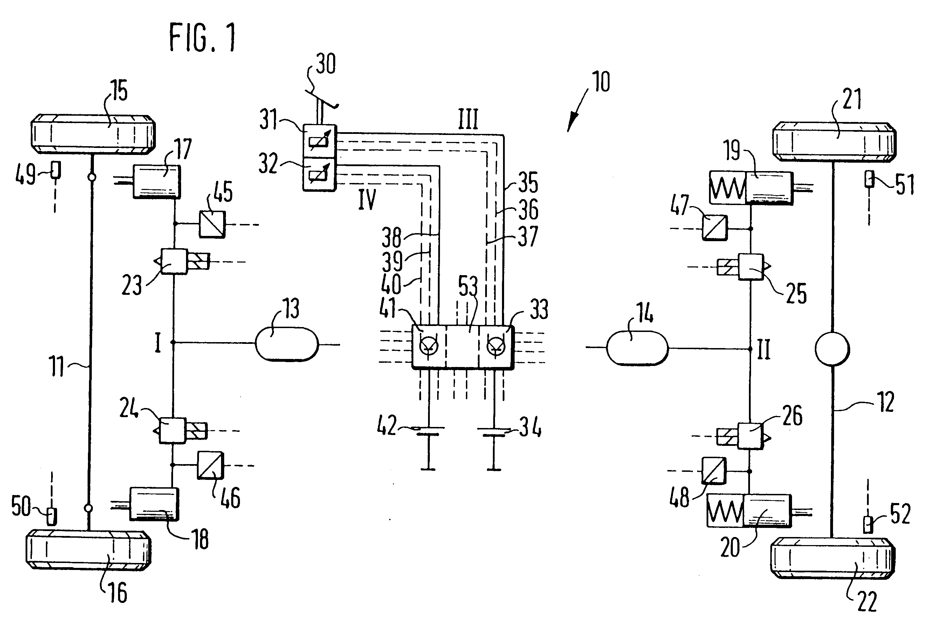

Die in Figur 1 schematisch dargestellte, druckmittelbetätigbare Bremsanlage 10 für ein mehrachsiges Kraftfahrzeug, z. B. einen Lastkraftwagen, weist einen der Vorderachse 11 des Fahrzeugs zugeordneten Druckmittelbremskreis I und einen der Hinterachse 12 zugeordneten Druckmittelbremskreis II auf. An jeden Bremskreis I bzw. II ist ein von einem nicht dargestellten Kompressor mit Druckluft auf Betriebsdruck aufgeladener Druckluftspeicher 13 bzw. 14 angeschlossen. Der Speicher 13 versorgt zwei den Rädern 15 und 16 der Vorderachse 11 zugeordnete Radbremszylinder 17 und 18 mit Druckluft. Mit dem Druckluftspeicher 14 sind zwei Radbremszylinder 19 und 20 verbunden, welche mit den Rädern 21 und 22 der Hinterachse 12 zusammenwirken. Außerdem ist jedem Radbremszylinder 17 bis 20 im entsprechenden Druckmittelbremskreis I und II je ein Drucksteuerventil 23 bis 26 zum Druckaufbau, Druckhalten oder Druckabbau des im entsprechenden Radbremszylinder wirkenden Bremsdrucks zugeordnet.

Die Bremsanlage 10 des Fahrzeugs ist durch ein Bremspedal 30 betätigbar. Dieses wirkt auf zwei elektrische Bremswertgeber 31 und 32 ein, welche mechanisch gekoppelt aber elektrisch getrennt sind. Der Bremswertgeber 31 wirkt auf einen elektrischen Steuerkreis III ein, welcher eine elektronische Steuereinrichtung 33 aufweist. Diese ist an eine eigene Spannungsversorgung 34 angeschlossen. Der Bremswertgeber 31 und die Steuereinrichtung 33 stehen durch eine Spannungsversorgungsleitung 35 und zwei Signalleitungen 36 und 37 in Verbindung. In entsprechender Weise ist der zweite Bremswertgeber 32 ebenfalls mit einer Spannungsversorgungsleitung 38 und zwei Signalleitungen 39, 40 an eine elektronische Steuereinrichtung 41 mit eigener Spannungsversorgung 42 eines zweiten elektrischen Steuerkreises IV angeschlossen. Außerdem stehen die beiden Steuereinrichtungen 33 und 41 durch im einzelnen nicht dargestellte Leitungen mit den Drucksteuerventilen 23 bis 26 sowie mit den einzelnen Radbremszylindern 17 bis 20 zugeordneten Drucksensoren 45 bis 48 in Verbindung. Darüber hinaus sind an die Steuereinrichtungen 33 und 41 den einzelnen Rädern 15, 16, 21 und 22 des Fahrzeugs zugeordnete Drehzahlfühler 49 bis 52 zugeordnet. Schließlich sind die beiden Steuereinrichtungen 33 und 41 mit einer Signalvergleichs- und Auswerteeinrichtung 53 gekoppelt.

Die Funktionsweise der Bremsanlage 10 ist im wesentlichen folgende:

Bei Betätigung des Bremspedals 30 werden entsprechend der vom Fahrer gewünschten Verzögerung des Fahrzeugs von beiden Bremswertgebern 31 und 32 Bremssignale erzeugt, welche als elektrische Spannungssignale über die Signalleitungen 36, 37 bzw. 39, 40 den elektronischen Steuereinrichtungen 33 und 41 zugeführt werden. In der jeweiligen Steuereinrichtung 33 bzw. 41 werden die herangeführten Spannungssignale auf Gültigkeit geprüft. Erkennt eine Prüfschaltung der elektronischen Steuereinrichtung 33 aus den beiden über die Signalleitungen 36 und 37 herangeführten Spannungssignale auf eine gewollte Bremsung, so wird diese durch auf die Drucksteuerventile 23 bis 26 in den Druckmittelbremskreisen I und II wirkende Schaltsignale ausgelöst. Haben beide Spannungssignale im elektrischen Steuerkreis III eine unzulässig große Abweichung oder liegt nur ein Spannungssignal vor, unterbleibt eine Bremsung im dem Steuerkreis III zugeordneten Bremskreis II. In entsprechender Weise arbeitet der andere elektrische Steuerkreis IV. Dabei werden in der Vergleichseinrichtung 53 die in beiden elektronischen Steuerkreisen III und IV vorliegenden Spannungssignale verglichen. Dies erfolgt vorteilhafterweise durch z. B. induktive Übertragung der Signale mittels Transformatoren oder durch Opto-Koppler, um eine galvanische Kopplung der beiden Steuerkreise III und IV zu vermeiden.

Die elektronischen Steuereinrichtungen 33 und 41 erfassen bzw. berechnen nach Inbetriebnahme des Fahrzeugs kontinuierlich aus den von den Drehzahlfühlern 49 bis 52 zugeführten elektrischen Signalen die Rad- bzw. Fahrzeuggeschwindigkeit, die Beschleunigung bzw. Verzögerung der Räder 15, 16, 21, 22 bzw. des Fahrzeugs sowie den Schlupf der Räder. Außerdem nehmen die Steuereinrichtungen 33 und 41 bei einer Bremsung den in den Radbremszylindern 17 bis 20 wirkenden Bremsdruck mit den Drucksensoren 45 bis 48 auf. In Abhängigkeit vom Raddrehverhalten wirken die Steuereinrichtungen 33 bzw. 41 zum Zwecke des Blockierschutzes auf die Drucksteuerventile 23 bis 26 der Druckmittelbremskreise I und II ein.

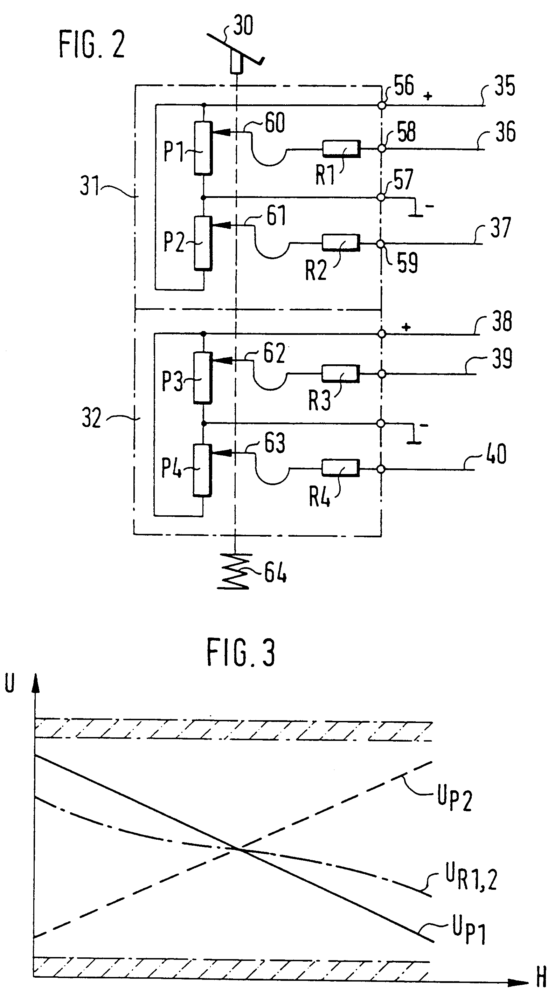

Der schematische Aufbau der beiden Bremswertgeber 31 und 32 ist anhand des Schaltbildes nach Figur 2 verdeutlicht: Der dem elektrischen Steuerkreis III zugeordnete Bremswertgeber 31 weist zwei parallelgeschaltete Potentiometer P1 und P2 auf. Beide Potentiometer P1 und P2 sind über eine Klemme 56 und die daran angeschlossene Spannungsversorgungsleitung 35 mit der Spannungsversorgung 34 der elektronischen Steuereinrichtung 33 verbunden. Über eine Klemme 57 sind die Potentiometer P1 und P2 an Masse angeschlossen. An eine Klemme 58 des Bremswertgebers 31 ist die Signalleitung 36, an eine Klemme 59 die Signalleitung 37 des elektrischen Steuerkreises III angeschlossen. Die Klemme 58 steht mit dem Abgriff 60 des Potentiometers P1 in Verbindung. Ein zwischen dem Abgriff 60 und der Klemme 58 liegender Überlastwiderstand R1 ist der Signalleitung 36 vorgeschaltet. Zwischen dem Abgriff 61 des Potentiometers P2 und der Klemme 59 des Bremswertgebers 31 liegt ein zweiter, der Signalleitung 37 vorgeschalteter Überlastwiderstand R2. Der Widerstand R1 hat einen kleineren ohmschen Widerstandswert als der Überlastwiderstand R2.

In entsprechender Weise ist der Bremswertgeber 32 mit Potentiometern P3 und P4 sowie Überlastwiderständen R3 und R4 ausgestattet und mit der Spannungsversorgungsleitung 38 sowie den beiden zu Potentiometerabgriffen 62 und 63 führenden Signalleitungen 39 und 40 des elektrischen Steuerkreises IV verbunden.

Die elektrisch voneinander getrennten Bremswertgeber 31 und 32 sind - wie bereits erwähnt - gemeinsam durch das Bremspedal 30 betätigbar. Hierzu ist ein Stößel 62 vorgesehen, welcher an den Abgriffen 60 und 61 des Bremswertgebers 31 und denjenigen des Bremswertgebers 32 angreift. Beim Betätigen des Bremspedals 30 durch den Fahrzeugführer werden entgegen der Kraft einer als Weg- und Kraftfeder wirkenden Rückstellfeder 64 alle Abgriffe 60 bis 63 der Bremswertgeber 31 und 32 synchron verstellt. Dabei werden an den Potentiometern P1 bis P4 elektrische Spannungssignale abgegriffen, deren Größe von der Stellung des entsprechenden Potentiometerabgriffs 60 bis 63 abhängig ist. In Figur 3 ist dies anhand des Diagramms verdeutlicht, in dem in der Ordinate die Spannung U und in der Abszisse der Hub H des Bremspedals 30 bzw. der Weg der Potentiometerabgriffe 60 bis 63 dargestellt ist. Dabei ergibt sich für das Potentiometer P1 ein Verlauf des Spannungssignals über den Hub, wie er durch die Linie U_{P1} und für das Potentiometer P2 durch die Linie U_{P2} wiedergegeben ist. Aufgrund der aus der Figur 2 ersichtlichen gegensinnigen Schaltung der Potentiometer P1 und P2 an die Spannungsversorgungsleitung 35 und an Masse ergibt sich ein umgekehrt proportionaler Verlauf der beiden Spannungen U_{P1} und U_{P2}. Durch die Summierung der beiden Spannungen U_{P1} und U_{P2} im elektronischen Steuergerät 33 des Steuerkreises III kann erkannt werden, ob unter Berücksichtigung zulässiger Abweichungen gültige Signale vorliegen. Bei einem Kurzschluß einer oder beider Signalleitungen 36 bzw. 37 gegen die Spannungsversorgungsleitung 35 oder gegen Masse treten dagegen Spannungssignale auf, welche in den schraffierten Bereichen des Diagramms liegen und von der Steuereinrichtung 33 als fehlerhaft erkannt werden können. Kommt es dagegen zu einem Kurzschluß zwischen den beiden Signalleitungen 36 und 37, so nimmt der Summenwert der Spannungssignale aufgrund der ungleichen Widerstandswerte der Überlastwiderstände R1 und R2 über den Betätigungsweg einen Verlauf, wie er in Figur 3 durch die Kurve U_{R1, 2} wiedergegeben ist. Die elektronische Steuereinrichtung 36 kann auch in diesem Fall die Fehlerhaftigkeit der Spannungssignale erkennen. In entsprechender Weise können die Signale des Bremswertgebers 32 durch die elektronische Steuereinrichtung 41 des Steuerkreises IV ausgewertet werden.

## Patentansprüche

1. Druckmittelbetätigbare Bremsanlage (10) für Fahrzeuge, insbesondere Nutzkraftfahrzeuge, mit mindestens einem elektrischen Steuerkreis (III), der mindestens eine Steuereinrichtung (33) und in Druckmittelbremskreisen (I, II) für Radbremszylinder (17 bis 20) liegende Drucksteuerventile (23 bis 26) sowie ein Bremswertgeber (31) zum Erzeugen eines elektrischen Spannungssignals zugeordnet sind, welches mit einer Signalleitung (36) zur Steuereinrichtung übertragbar ist, dadurch gekennzeichnet, daß mit dem Bremswertgeber (31) ein zweites elektrisches Spannungssignal mit zum ersten Signal umgekehrt proportionalem Verlauf erzeugbar und mit einer zweiten Signalleitung (37) zur Steuereinrichtung (33) für den Vergleich der Signale übertragbar ist und daß den beiden Signalleitungen (36, 37) Widerstände (R1, R2) ungleicher Größe vorgeschaltet sind.

2. Bremsanlage nach Anspruch 1, dadurch gekennzeichnet, daß die beiden Spannungssignale mit Hilfe von Potentiometern (P1, P2) erzeugbar sind, deren Abgriff (60, 61) mit einem Betätigungsorgan des Bremswert- gebers (31), z. B. einem Bremspedal (30), verbunden ist.

## Claims

1. Brake system (10), which can be operated by a pressure medium, for vehicles, especially commercial vehicles, having at least one electrical control circuit (III) and to which at least one control device (33), pressure control valves (23 to 26) which are located in pressure medium brake circuits (I, II) for wheel brake cylinders (17 to 20), and a braking level transmitter (31) for producing an electrical voltage signal are allocated, which voltage signal can be transmitted to the control device by means of a signal line (36), characterised in that a second electrical voltage signal, whose response is inversely proportional to the first signal, can be produced using the braking level transmitter (31) and can be transmitted to the control device (33), using a second signal line (37), for comparison of the signals, and in that resistors (R1, R2) of different magnitude are connected upstream of the two signal lines (36, 37).

2. Brake system according to Claim 1, characterised in that the two voltage signals can be produced with the aid of potentiometers (P1, P2), whose pick-off (60, 61) is connected to an operating device of the braking level transmitter (31), for example to a brake pedal (30).

## Revendications

1. Installation de freinage pour véhicules pouvant être actionnée par un fluide sous pression (10), en particulier pour véhicules utilitaires, avec au moins un circuit électrique de commande (III) auquel sont au moins associés un dispositif de commande (33) et des vannes de commande de pression (23 à 26) se trouvant dans des ci.rcuits de freinage à fluide sous pression (I, II) pour cylindres de frein de roue (17 à 20), ainsi qu'un détecteur de valeur de freinage (31) pour produire un signal électrique de tension, qui peut être transmis par une ligne de signalisation (36) au dispositif de commande, installation de freinage caractérisée en ce qu'avec le détecteur de valeur de freinage (31) on peut produire un deuxième signal électrique de tension électrique de tension avec une évolution inversement proportionnelle au premier signal et avec une deuxième ligne de signalisation (37) on peut transmettre ce deuxième signal électrique de tension au dispositif de commande (33) pour effectuer la comparaison des signaux et en ce que des résistances (R1, R2) de grandeur inégale sont montées en amont des deux lignes de signalisation (36, 37).

2. Installation de freinage selon la revendication 1, caractérisée en ce que les deux signaux de tension peuvent être produits à l'aide de potentiomètres (P1, P2) dont la prise (60, 61) est reliée à un organe d'actionnement du détecteur de valeur de freinage (31), par exemple à une pédale de frein (30).
